# EUROPEAN PATENT APPLICATION

(11) **EP 4 818 897 A1**
(43) Date of publication of application: **07.10.2026**
(21) Application number: 25223698.9
(22) Date of filing: 16.12.2025
(51) Int. Cl.: G06F 9/455

(54) **INTERACTION BETWEEN CONTAINERS IN A DISTRIBUTED CONTAINER SYSTEM**

(30) Priority: 31.03.2025 FI 20255298
(71) Applicant: Nokia Solutions and Networks Oy, 02610 Espoo (FI)
(72) Inventor: EL ABED, Haithem, c/o Nokia Networks France, Massy (FR); BOUTIGNY, François, c/o Nokia Networks France, Massy (FR); PAPILLON, Serge, Paris (FR)
(74) Representative: Nokia EPO representatives

(57) **Abstract**

The present subject matter relates to a method comprising: obtaining one or more baseline records of a target container component of a distributed container system, wherein each baseline record describes an execution behavior of the target container component, wherein the one or more baseline records are stored in a shared record system of the distributed container system; and obtaining an analysis record associated with the one or more baseline records for enabling interaction with the target container component, wherein the analysis record indicates a trustworthiness of the target container component, wherein the analysis record is stored in the shared record system.

## Description

### TECHNICAL FIELD

Various example embodiments relate to computer systems, and more particularly to a container system for enabling interaction between container components in a distributed container system.

### BACKGROUND

Containerized computing environments are widely used for deploying applications as isolated units with their own runtime, dependencies, and execution behavior. These environments often include multiple container components that may interact across distributed systems. However, there is a continuous need for improving such interactions.

### SUMMARY

Example embodiments provide a container system comprising at least one processor; and at least one memory storing a set of one or more container components, referred to as set of container components, that, when executed by the at least one processor, cause the container system at least to: obtain one or more baseline records of a target container component of a distributed container system, wherein each baseline record describes an execution behavior of the target container component, wherein the one or more baseline records are stored in a shared record system shared with container systems of the distributed container system; obtain an analysis record associated with the one or more baseline records for enabling interaction with the target container component, wherein the analysis record indicates a trustworthiness of the target container component, wherein the analysis record is stored in the shared record system.

Example embodiments provide a method comprising: obtaining one or more baseline records of a target container component of a distributed container system, wherein each baseline record describes an execution behavior of the target container component, wherein the one or more baseline records are stored in a shared record system of the distributed container system; and obtaining an analysis record associated with the one or more baseline records for enabling interaction with the target container component, wherein the analysis record indicates a trustworthiness of the target container component, wherein the analysis record is stored in the shared record system.

Example embodiments provide a computer program product comprising processor executable instructions for causing an apparatus for performing at least the method the processor executable instructions comprise a set of one or more container components.

Example embodiments provide a non-transitory computer readable medium comprising program instructions that, when executed by an apparatus, cause the apparatus to perform at least the method, the program instructions comprise a set of one or more container components.

"First," "second," etc. as used herein, these terms are used as labels for nouns that they precede, and do not imply any type of ordering (e.g., spatial, temporal, logical) unless explicitly defined as such.

### BRIEF DESCRIPTION OF THE DRAWINGS

The accompanying figures are included to provide a further understanding of examples, and are incorporated in and constitute part of this specification. In the figures:
FIG. 1 is a block diagram of a distributed container system according to an example of the present subject matter;
FIG. 2 is a process flowchart illustrating a method for enabling interaction with a target container component of a distributed container system according to an example of the present subject matter;
FIG. 3 is a block diagram of a distributed container system according to an example of the present subject matter;
FIG. 4A illustrates an example of baseline record creation initiated by a component producer according to an example of the present subject matter;
FIG. 4B illustrates an alternative example in which baseline records are created by multiple agent container components according to an example of the present subject matter;
FIG. 5 illustrates an example of the generation of an analysis record in response to a trust evaluation request according to an example of the present subject matter; and
FIG. 6 is a block diagram illustrating an example apparatus according to the present subject matter.

### DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may support trust-based interaction between container components in a decentralized distributed container system, where each container component operates independently and is responsible for its own behavior. In such settings, assessing whether a given container component is likely to behave as expected may be particularly challenging due to the absence of centralized control and the dynamic nature of container deployments. The present subject matter may enable each container system to obtain behavior-related data via a shared record system accessible across multiple domains. The domain may refer to a logically or administratively distinct environment comprising one or more container systems under a common trust, operational, or policy framework, for example, an enterprise network, a cloud-based cluster, or an organizational unit within a federated system. This may allow a container component to evaluate the trustworthiness of another container component prior to interaction, thereby enhancing security, reliability, and accountability within the distributed container system. By supporting decentralized validation of behavior and provenance, the present subject matter may facilitate scalable trust establishment across federated or heterogeneous container environments.

A container system may be provided. The container system may be part of a distributed container system. The container system may comprise at least one processor, and at least one memory storing a set of one or more container components. The one or more container components may be referred to as a set of container components for ease of reference throughout the present description and may be understood as comprising one or more container components unless explicitly stated otherwise. Execution of the set of container components may cause the container system to perform examples according to the present subject matter.

The distributed container system may comprise the container system and one or more other container systems. The distributed container system may be configured to implement a distributed mechanism for enabling interoperation between the container systems while allowing each container system to remain independently managed. The distributed mechanism may, for example, comprise protocols, processes, or interfaces that enable multiple independently managed container systems to interact, contribute data, and validate information without relying on a central controlling entity. This may allow the distributed container system to be decentralized, meaning that no single authority may control operation of the container systems within the distributed container system. Instead, each container system within the distributed container system may function as an autonomous unit. Such autonomy may be reflected in the ability of each container system to manage its own internal components, execute containerized workloads, and perform internal services such as scheduling or monitoring. Although the container systems may communicate through defined interfaces or shared infrastructures, they may remain operationally independent, interoperating selectively while preserving local control over execution and governance.

The present subject matter may enable control over the interoperation between container components of the distributed container system by allowing each container system to operate independently, while still using a shared record system accessible across the distributed container system. This may allow decentralization to be maintained at the levels of execution, administration, and policy control, while enabling container systems to observe component behavior through data sharing, instrumentation, or monitoring processes, whether performed locally within a container system or initiated across systems, thereby supporting secure and verifiable collaboration without requiring centralized oversight.

Each container component in the set of container components may comprise one or more containers. A container may be implemented as a portable, and isolated execution environment. A container may, for example, encapsulate the necessary runtime environment for a given microservice, including application code, configuration files, libraries, and dependencies. The container may further include metadata to allow standardized deployment and execution independent of the underlying host system. In one example, the container may be packaged as a portable image comprising a file system snapshot along with all components necessary for execution, such as application code, runtime environment, libraries, dependencies, and configuration files, thereby enabling reproducible and isolated execution across different computing environments. This may allow the container to simulate a self-contained software application that runs as an isolated process, independent of other containers running in parallel. While containers may operate independently, they may share a common underlying operating system kernel, enabling efficient resource usage across the container system.

Containers in the set of container components may communicate with one another using internal networking within the container system, such as direct Internet Protocol (IP)-based communication, or inter-process communication. Additionally, containers may interact with containers hosted on other container systems of the distributed container system using inter-system communication mechanisms, which may include routable network channels or service-level abstractions across domains.

The container system may be configured to perform an operation by executing one or more container components stored in the one or more memories of the container system, using the at least one processor of the container system.

The container system may be configured to obtain one or more baseline records of a target container component of the distributed container system, wherein each baseline record describes an execution behavior of the target container component. This process may be referred to as baseline record obtaining operation. The one or more baseline records are stored in the shared record system shared with container systems of the distributed container system. The target container component may or may not be part of the container system. The target container component is a container component. The term "target" is used for naming purposes to indicate that this container component is the subject of a particular operation.

A baseline record is named to indicate that it represents a behavioral baseline or reference of a specific container component, allowing it to be associated with the corresponding execution context within the distributed container system. The baseline record of a container component may be a data record. The data record may refer to a structured set of information representing the execution behavior of the container component. The execution behavior of the container component may include information such as resource usage patterns, network activity, system interactions, or other indicators of how the container component operates. To facilitate retrieval and promote transparency by permitting scrutiny, the one or more baseline records of the target container component, as well as those of other container components, may be stored in the shared record system accessible by multiple container systems participating in the distributed container system, thereby enabling decentralized access and reuse of behavioral data across independently managed environments.

The shared record system may be implemented as a distributed ledger, decentralized database, or another accessible and verifiable data source shared among container systems. The shared record system may, for example, be configured as an append-only structure, meaning that data entries, once written, cannot be modified or deleted, but only extended with new entries. This property may help ensure traceability across independently managed container systems, thereby supporting verifiable collaboration and auditability in decentralized environments.

The container system may be configured to obtain an analysis record associated with the one or more baseline records for enabling interaction with the target container component, wherein the analysis record indicates a trustworthiness of the target container component. This process may be referred to as analysis record obtaining operation. The analysis record is stored in the shared record system.

The trustworthiness may refer to a measure of confidence that the target container component will behave as expected during execution. The analysis record may serve as an evaluation result indicating a level of trust or behavioral consistency of the target container component. The analysis record being associated with the one or more baseline records may mean that it is derived from a processing of at least part of the one or more baseline records of the target container component, where the processing may, for example, include comparing a current or observed execution behavior of the target container component with the baseline records, identifying deviations, calculating similarity or dissimilarity metrics, or applying evaluation rules to determine conformity with expected behavior. By using the analysis record, it may be determined whether or not to perform interaction with the target container component, meaning that the interaction may be selectively enabled or restricted based on the evaluated trustworthiness. The term "restricted" may be understood as encompassing different levels or modes of interaction, depending on the degree of trust evaluated, such as limiting the type of data allowed to be exchanged and the scope of services permitted to be requested. The term "interaction" may refer to any form of operational engagement, such as invoking an interface, exchanging data, or initiating a service request, between the target container component and one or more other container components. This interaction may occur between container components within the same container system or across different container systems of the distributed container system.

The analysis record may be a data record, where the data record refers to a structured set of information comprising metrics or indicators derived from the processing of the one or more baseline records. Such metrics may include, for example, dissimilarity scores, timing deviations, or behavior anomaly indicators. To facilitate retrieval and shared use, the analysis record may be stored in the shared record system accessible by multiple container systems participating in the distributed container system. This may enable decentralized verification, reuse of prior analyses, and trust-based decision-making across independently operated environments.

The baseline record obtaining operation and the analysis record obtaining operation may be performed by execution of the same container component of the set of container components, or by execution of different container components within the set, e.g., one container component may be responsible for performing the baseline record obtaining operation, while another container component may be responsible for performing the analysis record obtaining operation.

In one example, the analysis record obtaining operation may comprise obtaining at least one analysis record associated with the one or more baseline records for enabling interaction with the target container component, wherein the at least one analysis record indicates a trustworthiness of the target container component, wherein the analysis record is stored in the shared record system. For example, the at least one analysis record may comprise multiple analysis records. For example, the analysis records may be aggregated for determining the score indicative of the trustworthiness of the target container component from the aggregated analysis record. The aggregation may be performed, for example, as described herein with reference to the baseline records.

According to one example, the container system may be configured to obtain the one or more baseline records by: creating the one or more baseline records and storing the one or more baseline records in the shared record system; or retrieving the one or more baseline records from the shared record system.

This example may enable the container system to implement the obtaining of one or more baseline records either by generating them locally or by retrieving them from the shared record system. In the first case, local generation may be advantageous when no prior behavioral data is available or when the container system may require an up-to-date profile of the target container component. In the second case, retrieval from the shared record system may be beneficial for reducing overhead and leveraging existing trust assessments produced by the container system itself or other container systems. This flexible implementation may support both first-time profiling and reuse of established behavioral data. This approach may allow the container system to operate autonomously when necessary while also enabling efficient collaboration and trust reuse across distributed environments by accessing baseline records.

In one example, the created one or more baseline records may be one baseline record. Alternatively created one or more baseline records may be one baseline record. The one or more baseline records may be created by at least one of: (1) executing the target container component in a simulated or sandboxed environment to monitor the execution and create the baseline record accordingly; (2) bootstrapping a new, second instance of the target container component using an integrity-protected executable to ensure a clean behavioral capture; or (3) obtaining a baseline record from another container component that has similar functional capabilities to the target container component.

According to one example, the set of container components comprise the target container component and an agent container component, wherein the obtaining of the one or more baseline records and the obtaining of the analysis record is performed by execution of the agent container component. For example, the baseline record obtaining operation and the analysis record obtaining operation may be performed by execution of the same container component which is the agent container component.

The agent container component is a container component. The term "agent" is used for naming purposes to indicate that this container component is configured to perform specific tasks related to trust analysis.

The advantage of this structure may be modularity and separation of concerns: the target container component can remain focused on its primary functionality, while the agent container component handles trust evaluation and behavior monitoring. This may allow for greater flexibility, simplify container roles, and facilitate distributed trust management.

According to one example, the container system may be configured to receive a request, of a source container component, of trustworthiness of the target container component for interaction with the target container component.

The source container component is a container component. The term "source" is used for naming purposes to indicate that this container component is configured to interact with the target container component, wherein the interaction may be initiated by either the source container component or the target container component.

The request may trigger execution of the analysis record obtaining operation, where the baseline record obtaining operation may have been performed beforehand or independently of the request. This may enable reuse of previously generated baseline records, reducing processing overhead and latency. Alternatively, the request may trigger the baseline record obtaining operation first, followed by execution of the analysis record obtaining operation. In cases where no baseline record is available for the target container component, the baseline record may be obtained by: (1) executing the target container component in a simulated or sandboxed environment to observe and create the baseline record; (2) bootstrapping a new, second instance of the target container component using an integrity-protected executable to ensure a clean behavioral capture; or (3) obtaining a baseline record from another container component that has similar functional capabilities to the target container component. In these cases, a separation between the baseline record obtaining operation and the analysis record obtaining operation may be preserved, which may be achieved through temporal separation (e.g., same target container component at different points in time), spatial separation (e.g., same executable in a different execution environment or instance), or natural separation (e.g., distinct but functionally similar components).

The request may originate from the source container component, meaning that the execution of the source container component may initiate the request for trustworthiness of the target container component. This approach may introduce a trust-checking step before any operational engagement, which can help prevent interactions with compromised or unverified components. This may support dynamic, context-aware decision-making and align well with decentralized environments where components may not inherently trust one another.

According to one example, the set of container components comprises the agent container component and the source container component, wherein the receiving of the request is performed by execution of the agent container component.

For example, execution of the set of container components by the container system may result in the source container component issuing the request, e.g., via inter-container messaging, which is received by the agent container component. This separation of roles may allow the source container component to remain focused on its business logic, while delegating trust evaluation to a dedicated component. This modularity may enable reuse of the agent container component across different source container components.

According to one example, the container system may be configured to (or caused to), by execution of the source container component: derive based on the analysis record a score and based on the score perform interaction with the target container component. The score comprises a trustworthiness score of the target container component.

The source container component may be configured to include a decision-making module or logic that interprets the analysis record and outputs a numerical or categorical trustworthiness score. For example, the set of information in the analysis record may, for example, be used to evaluate the score by considering at least behavioral deviations, provenance data, or the trust level of the container component that generated the analysis record. The resulting score may then be used to conditionally enable or block all or specific interactions, such as API calls, data sharing, or service requests between the source container component and the target container component. For example, based on the score, the source container component may restrict, block, or allow interaction with the target container component. This may allow the source container component to make autonomous, trust-aware decisions based on shared and verifiable data, thereby supporting real-time security enforcement in dynamic environments and reducing reliance on centralized access control mechanisms.

According to one example, the score further comprises a trustworthiness score of the agent container component. For example, the analysis record may further indicate a trustworthiness of the target container component. This may, for example, be implemented by associating the analysis record with metadata identifying the agent container component that generated it and optionally referencing additional records or historical performance metrics of that agent container component to compute its trustworthiness. In one example, an agent container component may create a baseline record for that agent container component, and the baseline record may be used to further score the trustworthiness of the agent container component. The source container component may then factor both the trustworthiness of the target container component and that of the agent container component into its overall decision-making logic, such as by applying weighting or threshold rules. This may reduce the risk of relying on potentially compromised or unverified agents and strengthening the overall integrity and resilience of the system's trust framework.

According to one example, the container system may be configured to obtain the analysis record by: retrieving the analysis record from the shared record system. This may, for example, be implemented by execution of a container component, such as the agent container component, that performs a lookup in the shared record system using identifiers associated with the target container component, such as a component ID, version, or run identifier. This may enable efficiency and consistency: by reusing previously generated analysis records, the container system may avoid redundant computation, reduce response latency, and ensure alignment across independently managed container systems. Alternatively, the container system may create the analysis record by performing a new analysis to mitigate the risk of undetected behavioral changes or malicious deviations over time.

According to one example, the container system may be configured to obtain the analysis record by at least: deploying a probe to determine a current execution behavior of the target container component, comparing the current execution behavior with the one or more baseline records, creating the analysis record based on the comparison and storing the analysis record in the shared record system.

The deployment of the probe may comprise initiating the probe, where the probe may be, for example, a monitoring tool deployed within the execution environment of the target container component. The execution environment may be a container system in which the target container component is running. The probe may collect runtime metrics, such as CPU usage, network activity, or system calls of the target container component, which may then be processed and compared against expected behavioral patterns defined in the baseline records. Based on observed deviations or conformity, the container system may generate the analysis record comprising evaluation results and supporting metadata. Storing this analysis record in the shared record system may ensure that the container system and other container systems can access and reuse the analysis as part of their own trust assessment processes.

According to one example, the set of container components comprises the agent container component and the source container component, wherein the source container component is provided for interaction with the target container component. The container system may be configured to provide, by execution of the agent container component, a result of the comparison to the source container component, and by execution of the source container component: derive a score, the score comprising a trustworthiness score of the target container component and based on the score perform interaction with the target container component.

For example, based on the score, the source container component may restrict, block, or allow interaction with the target container component. This example may enable the separation of responsibilities: the agent container component may focus on behavioral analysis, while the source container component may retain control over interaction decisions. This modular approach may promote security, and scalability.

According to one example, the one or more baseline records comprise multiple baseline records. The container system may be configured to: compare the current execution behavior with the baseline records by at least: aggregating the baseline records while maintaining individual information within the aggregated record regarding the aggregated baseline records and comparing the current execution behavior with the aggregated record in accordance with weights assigned to the container components that created the baseline records.

For example, the container system may be configured to implement an aggregation process in which the multiple baseline records are combined into a unified, aggregated baseline representation, while retaining individual information corresponding to each of the baseline records. This may be achieved by maintaining source-specific tags or provenance fields within the aggregated record. For example, the processing of each aggregated baseline record may be performed to derive analysis results, such as a trustworthiness score. The individual information may include, for example, the analysis results and metadata indicating the identity of the container component that generated the respective baseline record. This individual information may be used to determine respective weights for the baseline records during aggregation; for instance, the weights may vary depending on the reliability, historical performance, or trustworthiness of the generating container components. In one example, the weights may depend the time of creation of the baseline records. During comparison with the current execution behavior, the container system may apply the weights to different portions of the aggregated record. This weighted comparison may allow the container system to prioritize more trustworthy inputs and downplay those with lower confidence. This may enable more nuanced assessments even when multiple, potentially conflicting baseline records are available, particularly useful in decentralized environments with varied sources of behavioral data.

In one example, the aggregating of multiple analysis records may be performed by assigning higher weights to more recent analysis records for reflecting current behavioral trustworthiness. In one example, when aggregating or referencing multiple baseline records, older baseline records may be weighted more heavily to emphasize long-term behavioral consistency and stability. This dual approach may support both responsiveness to recent threats and robustness through historically grounded trust evaluation.

According to one example, each baseline record of the one or more baseline records comprises a set of elements representing a model representation descriptive of the execution behavior of the target container component, and at least one of the following: identification data descriptive of the target container component, a container component that generated the baseline record, and a process associated with the generation of the baseline record; traceability metadata, including logging data descriptive of changes to the baseline record, a container component responsible for the change and corresponding timestamp; or proof of execution of the creation of the baseline record.

For example, each element of the set of elements in the baseline record may be an entry, which may comprise a respective attribute, data field, or object structure corresponding to one of the aforementioned components; namely, a behavioral model parameter, an identifier, a traceability log, or a proof of execution.

The model representation that describes the execution behavior of the target container component may comprise elements such as behavior patterns, expected metrics, or state transitions. The identification data may include, for example, unique identifiers for the target container component, the container component that generated the baseline record, and information about the process or context in which the baseline record was created. The traceability metadata may comprise logging data that tracks modifications to the baseline record, along with identifiers of the container component responsible for each change and the corresponding timestamps, where a timestamp may indicate the specific time at which the modification occurred. The proof of execution may serve as cryptographic or attestable evidence that the baseline record was actually generated by executing a container component under specified conditions, where the conditions may include the execution environment, input parameters, version of the container, or duration of execution. This structure of the baseline record may be implemented using structured data formats (e.g., JSON, PROTOBUF, ASN.1, or XML). The encoding of such formats may take any suitable form, including binary, textual, or a combination thereof.

The advantage of this design may be that it may support transparency, and verifiability of baseline records, thereby enabling more reliable and trustworthy evaluations, particularly in decentralized environments where baseline records may be reused or referenced by multiple independently managed container systems.

According to one example, the analysis record comprises a set of elements representing results of comparison between a determined execution behavior of the target container component and the one or more baseline records, and at least one of the following: identification data descriptive of the target container component, a container component that generated the analysis record, and a process associated with the generation of the analysis record; or proof of execution of the creation of the analysis record.

For example, each element of the set of elements in the analysis record may be an entry, which may comprise a respective attribute, data field, or value representing either a comparison metric (e.g., deviation scores, conformity ratings), metadata identifying the target container component or the generating container component, contextual information on the analysis process, or a cryptographic or attestable proof confirming that the analysis was conducted under specific conditions. Such proof may additionally or alternatively include attesting the execution of the analysis itself or specific sections of the execution.

This structure may enable systems to verify not only the outcome of the trust analysis but also the source and authenticity of the evaluation process itself, which may be especially beneficial in decentralized environments where analysis results may be reused or referenced by multiple independent container systems.

According to one example, the target container component is part of another container system of the distributed container system. This configuration may support cross-system interaction and allow a container system to assess and verify the trustworthiness of container components it does not directly manage. This may enable secure interoperation across independently administered container systems, which may particularly be valuable in decentralized, multi-stakeholder environments.

According to one example, the target container component is part of the container system. This may allow for local trust evaluation and decision-making without requiring external queries or coordination.

According to one example, an agent mode of operation refers to a creation of analysis records, the agent container component being configured to operate in accordance with the agent mode of operation.

The agent mode of operation may refer to a specific functional configuration in which the agent container component is responsible for at least creating analysis records. The agent mode of operation may further refer to the role of monitoring one or more container components, whether the monitored component is a normal container component or an agent container component, in order to create one or more baseline records descriptive of its execution behavior of the monitored container components. The agent container component may be launched with a configuration or runtime flag that activates this mode, allowing it to perform the analysis record obtaining operation autonomously or upon receiving a request. This may modularize the analysis functionality, allowing the same agent container component to be reused across different systems or contexts, and enabling dynamic role assignment.

According to one example, the agent container component is configured to switch from the agent mode of operation to a normal mode of operation for requesting trustworthiness of a container component for interaction with the container component.

For example, the agent container component may be configured to switch between the agent mode of operation, e.g., where it generates analysis records, and the normal mode of operation, e.g., where it acts as a source container component requesting trustworthiness of another container component prior to interaction. This may be implemented by including runtime logic or configuration flags that control the container's behavior based on context, such as an external request, internal policy, or system state. For instance, the agent container component may initially perform analysis tasks and store analysis records in the shared record system, and later transition into the normal mode of operation where it consumes those analysis records to assess whether interaction with a target container component is permissible. The advantage of this dual-mode capability may be operational flexibility: a single container component can serve both analysis and interaction roles, improving resource utilization, and enabling dynamic adaptation to changing system needs in decentralized environments. An additional advantage may be an increased autonomy of the container component.

Hence, when a container component operates in accordance with the agent mode of operation, it may be referred to as an agent container component, and when it operates in accordance with the normal mode of operation, it may be referred to as a normal container component. However, this does not exclude that the same container component may switch between the two modes of operation and thus between the corresponding designations. In this context, the source container component and the target container components may be normal container components.

According to one example, the set of container components comprise the source container component. The container system may be configured to perform, by execution of the source container component, interaction with the target container component based on the analysis record. For example, the source container component may process data in the analysis record, and based on the processing results it may may restrict, block, or allow interaction with the target container component.

In one example, the set of container components may comprise a plurality of container components. Each container component of the set of container components may comprise one container. Alternatively, each container component may comprise a plurality of containers. Still alternatively, the set of container components may comprise a mixture of container components, where some container components comprise a single container and others comprise multiple containers.

In one example, the container system may be part of a wireless communication system. In one example, the distributed container system may be part of the wireless communication system. For example, the distributed container system may be deployed in the context of a network of the wireless communication system to enable the orchestration and execution of network functions and services across geographically distributed infrastructure components. In this setting, for example, each container system may be instantiated within a distinct administrative domain, such as an edge site, regional data center, or central core network facility, each hosting containerized network functions or microservices that implement components of the architecture (e.g., user plane functions, session management, or radio access control) of the wireless communication system.

The wireless communication system comprises network nodes such as base stations, wherein each network node may serve devices located within the node's geographical area of service. The wireless communication system may support one or more radio access technologies (RATs). A radio access technology of the radio access technologies may, for example, be evolved universal terrestrial radio access (E-UTRA), Fifth-generation wireless networks (5G) new radio (NR), or a Sixth-generation wireless networks (6G) based system, but it is not limited to, as a person skilled in the art may apply the present subject matter to other wireless communication systems provided with necessary properties. The device may refer to an equipment that connects to and communicates with the wireless communication system to access services and applications provided by the wireless communication system.

In one example, the container system may be implemented as a cluster of one or more computing nodes, such as physical servers, virtual machines, or cloud instances, wherein the at least one processor and the at least one memory of the container system may be distributed across the one or more nodes of the cluster and collectively provide the computational and storage resources required for executing the set of container components. In one example implementation, In one example implementation, the cluster may be managed by a KUBERNETES-based orchestration system or by an alternative container orchestration platform, such as DOCKER-COMPOSE, or a proprietary orchestration framework, configured to coordinate the deployment, scheduling, and lifecycle management of the container components across the nodes of the cluster. The containers in these implementations may, for example, be deployed as isolated runtime environments within pods, services, or equivalent constructs, and may communicate via defined networking configurations.

In one example, each other container system of the distributed container system may also be implemented in a similar manner as the container system, wherein the distributed container system may employ a distribution mechanism that, for example, comprises shared protocols, interoperable APIs, decentralized storage layers, or federated orchestration schemes. This distribution mechanism may enable the container systems to operate independently while exchanging records, coordinating behaviors, or participating in trust evaluation workflows without relying on centralized control. The distribution mechanism may, for example, comprise the use of a distributed ledger technology (DLT) enabling tamper-evident, append-only records.

One example implementation of the DLT based distributed container system may provide a decentralized append only ledger that stores security artifacts related to container components running on the overlay over the container systems in the distributed container system. The baseline records may be created, in one example, by the component producer (during the development phase, integration phase and the deployment phase of the container component for example). Once the baseline is created, the producer adds a baseline record into the ledger. The baseline record contains the baseline, a universal identifier for the component and the identification of the producer. Alternatively, or additionally, the baseline records may be created by specialized agent container components who have the capabilities to deploy probes in the target system where the component to be profiled is located. This may be triggered in different ways: the component itself (to increase its own trustworthiness), a general-purpose security agent of the domain, or any other agent in the system. Multiple agent container components (which may be named Multi Behavior Analysis (MBA) Agents) may be asked at the same time to perform the building of the baseline, each one of them will add a separate record. Each baseline record contains the same run Identifier, the universal identifier of the component, the built baseline and the identification of the agent. An optional field in the form of a proof of execution could be included in the record, it could be used in the evaluation of the trust score assigned by agents to the results of analysis. For behavior monitoring, a container component A, before interacting with a container component B, would want to evaluate the trustworthiness of container component B. It has several options: If there is an existence analysis of container component B in the ledger, it can choose to rely on it. If there is none, it can request an analysis from one or multiple MBA Agents, in that case, each MBA agent will deploy probes and build a behavior, then it performs an analysis against the one or multiple baselines located in the ledger, the result of the analysis is sent to the container component requesting the analysis and a record is added to the ledger. This record contains the analysis, the identification of the MBA agent, the universal identifier of the component and the same run identifier of the global request. An optional proof of execution could also be included in the analysis. When using multiple baselines as references, the analysis agent can choose to aggregate them in one baseline and assign a provenance score of each element of the baseline. The analysis results in a list of metrics, for example (non-exhaustive): Elements dissimilarities, elements criticality, element execution time. Container component A derives a trustworthiness score of container component B using these analysis results as well as the trustworthiness of the MBA agent performing the analysis. MBA agents themselves can be monitored in the same way, becoming a subject of analysis and trustworthiness score assignment.

In one example, the use of a sandboxed environment, where a twin of the target agent may be spawned from the source image, with a replicated state (like the active-active redundancy scheme) may also be supported, allowing a decorrelation of the building of the reference from the operating system over which it is running.

In one example, a stakeholder SA (container system) may need to assess when to permit interactions between its container components and its container components from other stakeholders, such as its container component C, recognizing that while such interactions may offer benefits, they may also present risks- its container component C may misbehave, behave honestly but curiously, or act maliciously. The stakeholder SA may estimate potential resource losses but may remain uncertain about the likelihood of threats. This likelihood may be inferred from past direct experience, or from indirect sources such as certification or reputation of the container component C. For example, its container component C's reputation may be evaluated by analyzing historical analysis records that show deviations from baseline behavior, including whether its container component C behaves inconsistently across stakeholders. Reputation manipulation may also be detected, for instance if stakeholder SC associated with its container component C generates many favorable analysis records using baselines it created with MBA agents under its control. Data provenance may enable the detection of such manipulation, including coordinated efforts by multiple stakeholders. Reputation evaluation can further consider the MBA agents involved, their historical discrepancy weights, and their provenance.

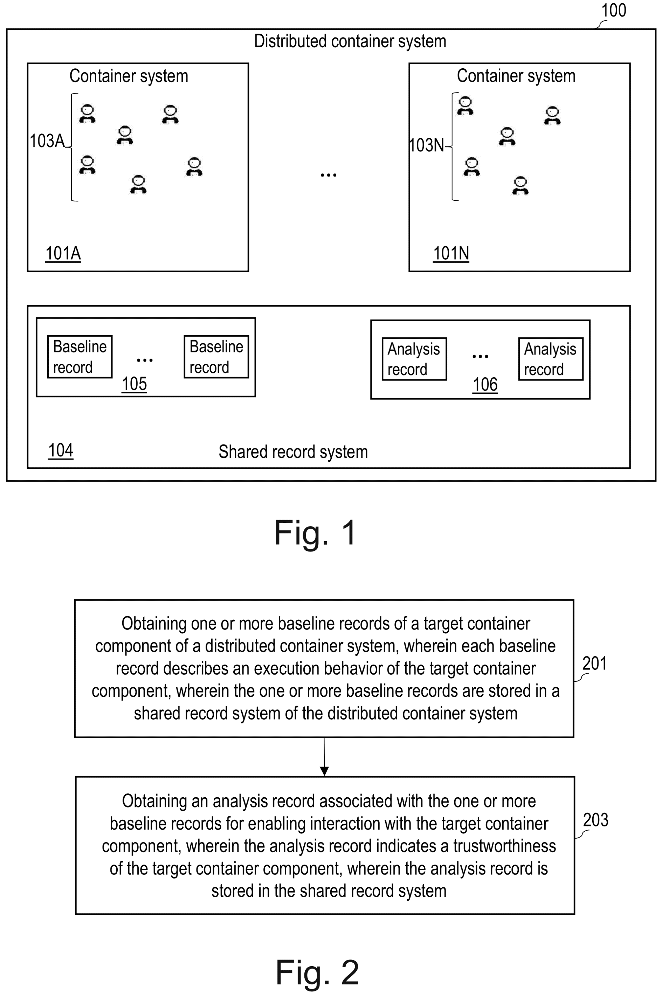

**FIG. 1** is a block diagram of a distributed container system according to an example of the present subject matter.

The distributed container system 100 may comprise two or more container systems 101A-101N, each operating within a distinct administrative scope. Each container system 101A-101N may include a set of container components 103A-103N, including normal container and agent container components.

The container systems 101A-101N may be independently managed and may interact over a decentralized infrastructure. A shared record system 104 may be accessible to all container systems 101A-101N of the distributed container system 100 and may be used for storing and retrieving baseline records 105 and analysis records 106.

Each container system 101A-101N may execute one or more container components 103A-103N that perform operational logic or enable trust evaluation. Trust evaluation may include observing execution behavior of a container component, comparing it with reference baseline records 105, and generating analysis records 106. These records may be stored in the shared record system 104 along with identification data and optional provenance information. Interactions between container components across container systems 101A-101N may be subject to trust checks initiated by one component and handled by another, depending on their role. The analysis record 106 may indicate the behavioral consistency of a container component with respect to one or more baseline records 105, and may be used by another container system to determine whether to proceed with an intended interaction.

The design of the distributed container system 100 may enable collaborative trust evaluation across container systems 101A-101N, while the shared record system 104 ensures transparency, auditability, and accessibility of records across decentralized and independently operated environments.

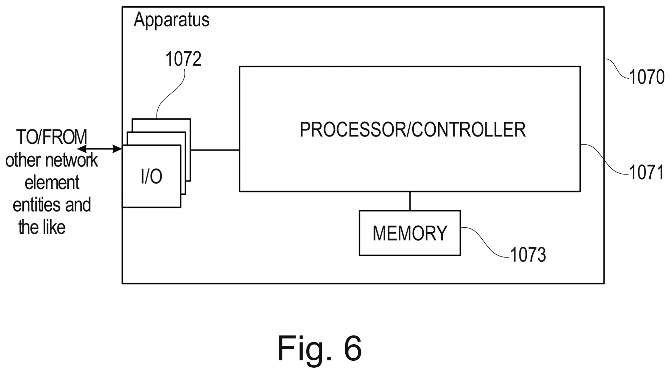

**FIG. 2** is a process flowchart illustrating a method for enabling interaction with a target container component of a distributed container system according to an example of the present subject matter. For the purpose of explanation, the method described in reference to FIG. 2 may be implemented in a container system such as the container system 101A-101N illustrated and described in reference to FIG. 1 or apparatus illustrated and described in reference to FIG. 6 but is not limited to this implementation.

One or more baseline records of the target container component of the distributed container system may be obtained in block 201, wherein each baseline record describes an execution behavior of the target container component, wherein the one or more baseline records are stored in a shared record system of the distributed container system.

An analysis record associated with the one or more baseline records may be obtained in block 203 for enabling interaction with the target container component, wherein the analysis record indicates a trustworthiness of the target container component, wherein the analysis record is stored in the shared record system.

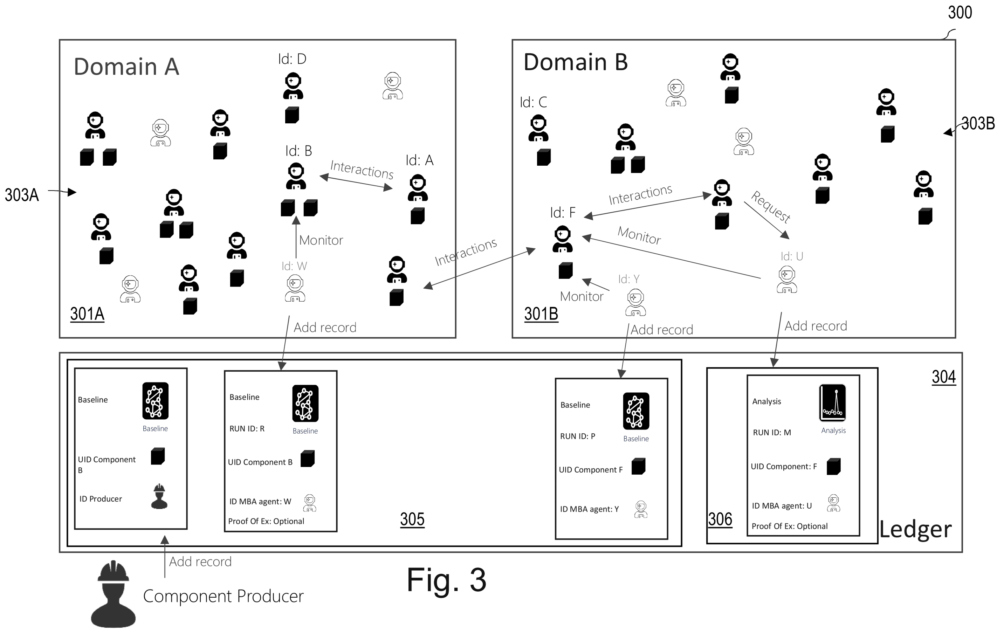

**FIG. 3** is a block diagram of a distributed container system according to an example of the present subject matter.

The distributed container system 300 comprises a plurality of container systems 301A-301B, each corresponding to an administrative domain such as Domain A and Domain B. Each container system 301A-301B includes a respective set of container components 303A-303B, comprising both normal container components (represented by filled icons) and agent container components (represented by empty icons). As indicated, each normal container component may be configured to interact with other normal container components and request from the agent container component analysis record or analysis results regarding a target container component. This may define an example of the normal mode of operation. As indicated, each agent container component may be configured to monitor normal container components and create analysis records. This may define an example of the agent mode of operation. Each container system may operate independently, while supporting interaction between container components across different domains.

Within each administrative domain, agent container components may perform monitoring operations on container components. For example, an agent container component (e.g., with Id: W in Domain A) may monitor the behavior of one or more container components and subsequently add a record to a shared record system 304, shown as the "Ledger" in the diagram. Similarly, in Domain B, another agent container component (e.g., Id: Y) may monitor a container component (e.g., Id: F) and submit related records to the shared record system 304.

The shared record system 304 stores baseline records 305 and analysis records 306. Each baseline record 305 may include a unique identifier of the monitored container component (UID Component), a run identifier (RUN ID), and an indication of the container component responsible for generating the record-either a component producer or an agent container component (which may be named as MBA agent).

Some records may further include an optional proof of execution (e.g., cryptographic evidence that monitoring or baseline generation occurred under specific conditions). Such proof may additionally or alternatively include attesting the execution of the analysis itself or specific sections of the execution.

Component producers may also contribute to the shared record system 304 by directly adding baseline records for components they develop, as illustrated at the diagram. These records may serve as trusted behavioral references before deployment.

Agent container components may also perform analysis operations. For instance, in Domain B, agent container Id: U receives a request from a normal container component (e.g., Id: F) to evaluate the trustworthiness of a target container component. In response, the agent may retrieve or generate an analysis record 306 by comparing current behavior of the target container component with one or more existing baseline records 305. The analysis record 306 may then be stored in the shared record system 304 and used to guide subsequent interactions between container components across domains.

This implementation may support decentralized trust evaluation, provenance tracking, and behavioral verification across multiple independently operated container systems. The combination of locally deployed MBA agents, component producers, and a shared ledger may provide a flexible and auditable mechanism for establishing trust in containerized environments.

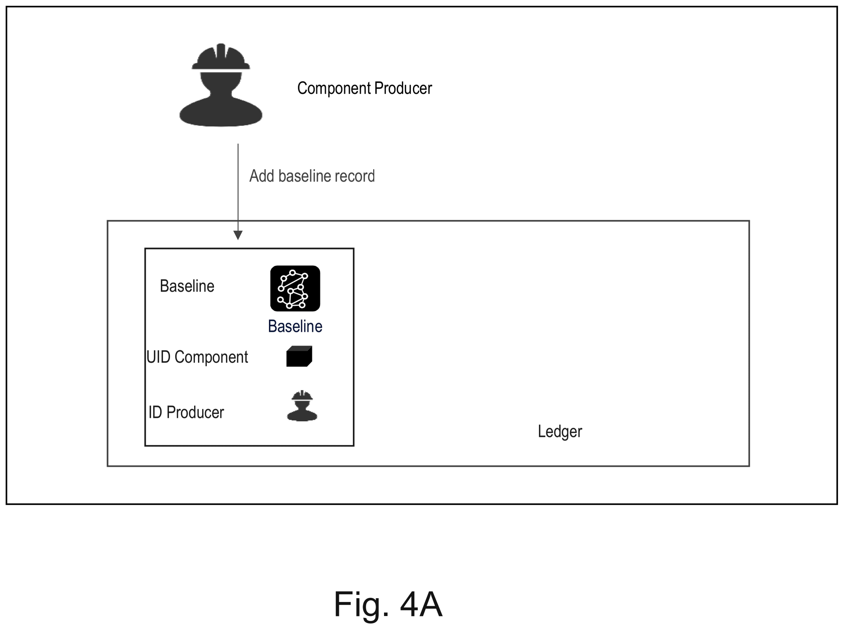

**FIG. 4A** illustrates an example of baseline record creation initiated by a component producer according to an example of the present subject matter. The component producer may be an entity responsible for developing or supplying a container component. As shown, the component producer may create a baseline record that describes expected execution behavior of a container component and may subsequently add the baseline record to a shared record system such as a ledger. The baseline record may include information such as a unique identifier of the monitored component (UID Component), a behavior model (Baseline), and an identifier of the component producer (ID Producer). This process enables behavioral expectations to be established and registered before deployment, forming a trusted reference for later verification and analysis.

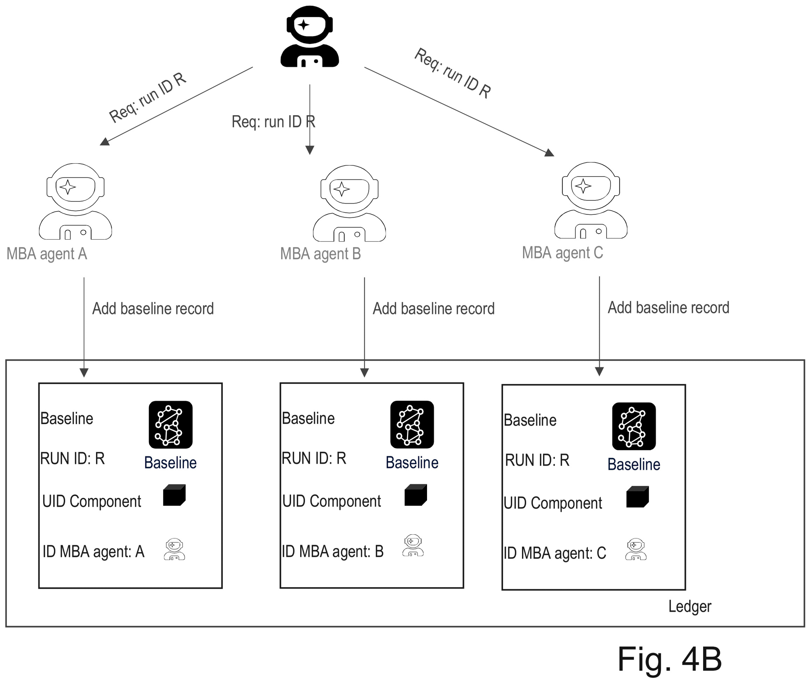

**FIG. 4B** illustrates an alternative example in which baseline records are created by multiple MBA agents, such as MBA agent A, MBA agent B, and MBA agent C, according to an example of the present subject matter. In this scenario, a requesting normal container component may issue a baseline creation request, associated with a specific run identifier (e.g., run ID R), to one or more MBA agents. Each MBA agent, upon receiving the request, may independently observe the behavior of the target container component, generate a corresponding baseline record, and add the record to the shared ledger. Each baseline record may include the run identifier (RUN ID R), a UID of the component being profiled, a behavior model, and an identifier of the MBA agent that generated the record. This approach may allow for the creation of multiple, potentially diverse, baseline records for the same container component, enabling richer behavior modeling and facilitating consensus or weighted trust evaluation based on multiple sources.

Together, FIGS. 4A and 4B illustrate two complementary mechanisms for generating and storing baseline records: one by the component producer prior to deployment, and the other by monitoring agents in operational environments.

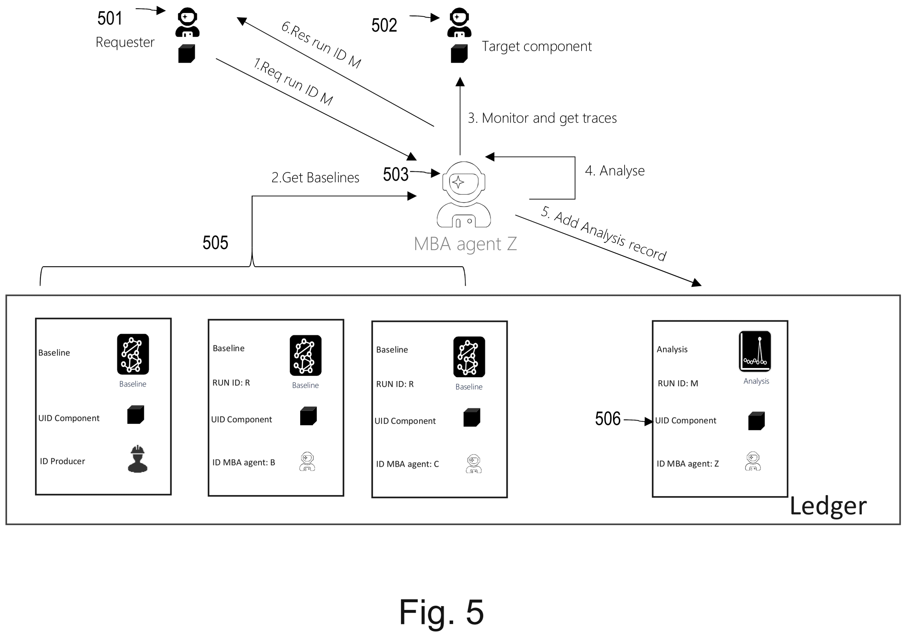

**FIG. 5** illustrates an example of the generation of an analysis record by an MBA agent 503 in response to a trust evaluation request according to an example of the present subject matter. A requester normal container component 501 may issue a request for evaluating the trustworthiness of a target normal container component 502, including an associated run identifier (e.g., run ID M). The request is directed to an MBA agent 503 (e.g., MBA agent Z), which is responsible for performing the analysis operation.

Upon receiving the request, the MBA agent 503 may initiate monitoring of the execution behavior of the target normal container component 502. This includes observing runtime behavior and collecting trace data from the target normal container component 502 during execution. In parallel, the MBA agent 503 may retrieve one or more baseline records 505 from the shared record system (referred to as the ledger), where these baseline records 505 may have been created by a component producer or other MBA agents in association with the same UID of the component and the run ID M. An additional step may consist of aggregating these multiple baseline records of a target container component into a unique baseline record that may be used for the analysis in order to create the analysis record. Information about the MBA agents that created each underlying baseline record and time of creation may be integrated into the behavior model. For example, if part of the baseline is modeled as state transition graph, the aggregated baseline results in a union of these graphs, with metrics attached to each node and each transition calculated for example as of a function of the number of occurrences, with each occurrence weighted by a score of the MBA agent, and the time of creation. The creation of the analysis record may be performed by aggregating the baseline records first and then performing the comparison with the current execution behavior to perform the analysis or performing multiple comparisons of each baseline record with the current execution behavior and then aggregate the multiple analysis records (e.g., integrating the additional information about the MBA agents and the creation time at this stage).

The MBA agent 503 then compares the collected traces of the target component's current behavior with the retrieved baseline records 505 to perform a behavioral analysis. Based on this comparison, the MBA agent 503 generates an analysis record 506, which includes the results of the comparison and associated metadata. The analysis record 506 may contain information such as the identifier of the target component, the run ID, an identifier of the MBA agent that performed the analysis, and optionally a proof of execution indicating that the analysis was conducted under verifiable conditions.

The generated analysis record 506 is subsequently added to the ledger, thereby making it accessible to other container systems or components within a distributed container system. This may enable trust-informed interaction decisions to be made based on objective and traceable evaluation of component behavior.

In **FIG. 6****,** a block circuit diagram illustrating a configuration of an apparatus 1070 is shown, wherein the apparatus 1070 is configured to implement at least part of the present subject matter. The apparatus 1070 may provide an example implementation of the container system. It is to be noted that the apparatus 1070 illustrated in FIG. 6 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 2.

For example, the processor 1071 is configured for: obtaining one or more baseline records of a target container component of a distributed container system, wherein each baseline record describes an execution behavior of the target container component, wherein the one or more baseline records are stored in a shared record system of the distributed container system; and obtaining an analysis record associated with the one or more baseline records for enabling interaction with the target container component, wherein the analysis record indicates a trustworthiness of the target container component, wherein the analysis record is stored in the shared record system.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. A container system comprising at least one processor, and at least one memory storing a set of one or more container components, referred to as set of container components, that, when executed by the at least one processor, cause the container system at least to:
obtain one or more baseline records of a target container component of a distributed container system, wherein each baseline record describes an execution behavior of the target container component, wherein the one or more baseline records are stored in a shared record system shared with container systems of the distributed container system;
obtain an analysis record associated with the one or more baseline records for enabling interaction with the target container component, wherein the analysis record indicates a trustworthiness of the target container component, wherein the analysis record is stored in the shared record system.

2. The container system according to claim 1, wherein the set of container components, when executed by the at least one processor, further cause the container system to obtain the one or more baseline records by:
creating the one or more baseline records and storing the one or more baseline records in the shared record system; or
retrieving the one or more baseline records from the shared record system.

3. The container system according to claim 1 or 2, the set of container components comprising the target container component and an agent container component, wherein the obtaining of the one or more baseline records and the obtaining of the analysis record is performed by execution of the agent container component.

4. The container system according to any of claims 1-3, wherein the set of container components, when executed by the at least one processor, further cause the container system to receive a request, of a source container component, of trustworthiness of the target container component for interaction with the target container component, wherein optionally: the set of container components comprises an agent container component and the source container component, wherein the receiving of the request is performed by execution of the agent container component.

5. The container system according to claim 4, wherein the set of container components, when executed by the at least one processor, further cause the container system to,
by execution of the source container component: derive based on the analysis record a score, the score comprising a trustworthiness score of the target container component and based on the score perform interaction with the target container component, wherein optionally: the score further comprising a trustworthiness score of the agent container component.

6. The container system according to any of claims 1-5, wherein the set of container components, when executed by the at least one processor, further cause the container system to obtain the analysis record by:
retrieving the analysis record from the shared record system; or
deploying a probe to determine a current execution behavior of the target container component;
comparing the current execution behavior with the one or more baseline records;
creating the analysis record based on the comparison;
storing the analysis record in the shared record system.

7. The container system according to claim 6, the set of container components comprising an agent container component and a source container component for interaction with the target container component, wherein the set of container components, when executed by the at least one processor, further cause the container system to:
provide, by execution of the agent container component, a result of the comparison to the source container component; and
by execution of the source container component: derive a score, the score comprising a trustworthiness score of the target container component and based on the score perform interaction with the target container component.

8. The container system according to claim 6 or 7, the one or more baseline records comprising multiple baseline records, wherein the set of container components, when executed by the at least one processor, further cause the container system to:
compare the current execution behavior with the baseline records by at least: aggregating the baseline records while maintaining individual information within the aggregated record regarding the aggregated baseline records, and comparing the current execution behavior with the aggregated record in accordance with weights assigned to the container components that created the baseline records.

9. The container system according to any of claims 1-8, each baseline record of the one or more baseline records comprising a set of elements representing a model representation descriptive of the execution behavior of the target container component, and at least one of the following:
identification data descriptive of the target container component, a container component that generated the baseline record, and a process associated with the generation of the baseline record;
traceability metadata, including logging data descriptive of changes to the baseline record, a container component responsible for the change and corresponding timestamp; or
proof of execution of the creation of the baseline record.

10. The container system according to any of claims 1-9, the analysis record comprising a set of elements representing results of comparison between a determined execution behavior of the target container component and the one or more baseline records, and at least one of the following:
identification data descriptive of the target container component, a container component that generated the analysis record, and a process associated with the generation of the analysis record; or
proof of execution of the creation of the analysis record.

11. The container system according to any of claims 1-10, the target container component being part of another container system of the distributed container system or being part of the container system.

12. The container system according to any of claims 4-11, wherein an agent mode of operation refers to a creation of analysis records, the agent container component being configured to operate in accordance with the agent mode of operation. wherein, optionally: the agent container component is configured to switch from the agent mode of operation to a normal mode of operation for requesting trustworthiness of a container component for interaction with the container component.

13. The container system according to any of claims 1-12, the set of container components comprising a source container component, wherein the set of container components, when executed by the at least one processor, further cause the container system to perform, by execution of the source container component, interaction with the target container component based on the analysis record.

14. A computer-implemented method comprising: obtaining one or more baseline records of a target container component of a distributed container system, wherein each baseline record describes an execution behavior of the target container component, wherein the one or more baseline records are stored in a shared record system of the distributed container system; and obtaining an analysis record associated with the one or more baseline records for enabling interaction with the target container component, wherein the analysis record indicates a trustworthiness of the target container component, wherein the analysis record is stored in the shared record system.

15. A computer program product comprising processor executable instructions for causing an apparatus for performing the method of claim 14, the processor executable instructions comprise a set of one or more container components.
